# EUROPEAN PATENT SPECIFICATION

(11) **EP 0 418 102 B1**
(45) Date of publication and mention of the grant of the patent: **15.06.1994**
(21) Application number: 90310088.1
(22) Date of filing: 14.09.1990
(51) Int. Cl.: B24B 31/12, B24B 55/06, B28D 5/02

(54) **Gemstone polishing table**
Edelsteinpoliertisch
Table de polissage de gemmes

(30) Priority: 15.09.1989 ZA 897056
(43) Date of publication of application: 20.03.1991
(73) Proprietor: DE BEERS INDUSTRIAL DIAMOND DIVISION (PROPRIETARY) LIMITED, Johannesburg, Transvaal (ZA)
(72) Inventor: Segal, Thomas, Ranburg, Transvaal (ZA)
(74) Representative: Senior, Alan Murray

(56) References cited:
- EP-A- 0 313 369
- DE-U- 8 322 326
- MASCHINE + WERKZEUG, vol. 16, 15 August 1977, Coburg, DE pages 16 - 18; H.MÜRMANN: "Weg mit dem Staub beim Schleifen und Polieren"

## Description

This invention relates to a gemstone polishing table.

Known gemstone polishing tables mount a rotating disc or skive which carries an abrasive powder. A stand on the table supports a dop or gemstone holder, and the dop is movable in various different ways to bring a gemstone held by the dop against the disc with the result that the stone is polished by the abrasive disc. An example of a known gemstone polishing table is described in EP-A-0313369.

One of the problems associated with conventional polishing tables is the creating of fine dust during the polishing process. The dust settles on all adjacent surfaces and generally makes the polishing environment dirty and not conducive to the production of high quality cuts or polishes on the facets of the gemstone. In addition, inhalation of the dust can be dangerous from a health point of view.

According to the present invention there is provided a gemstone polishing table comprising a table top, a skive which is rotatable about an upright axis and which is recessed in the table top with at least a major part of an upper, abrasive surface of the skive exposed and an annular duct recessed in the table top and surrounding the skive for receiving dust created during a gemstone polishing operation, characterised in that the table further comprises an outlet leading from the duct for exhausting dust from the duct and an annular lid extending over the duct and defining a gap between the upper surface of the skive and the under-surface of the lid for passage of dust into the duct.

The outlet may comprise an outlet conduit leading away from the duct. The table may also include a suction source connectable to the outlet conduit to improve the suction of dust into the duct.

The table top may also comprise a plurality of recessed mounting locations for mounting of gemstone holding equipment on the table top.

Preferably the upper surface of the skive lies in a plane parallel to and just beneath the upper surface of the table top, with the annular lid fixed to the table top and extending over the periphery of the skive.

In a preferred form of the invention, the table top and annular lid are made of plastics material.

The invention will now be described in more detail, by way of example only, with reference to the accompanying drawings in which:
- Figure 1: shows an exploded perspective view of a gemstone polishing table of the invention;
- Figure 2: shows a perspective view of the same table with the scaive and lid in position; and
- Figure 3: shows a cross-section at the line 3-3 in Figure 2.

The illustrated gemstone polishing table has a rectangular table top 10 made of PVC (Polyvinyl chloride) which is supported by legs 12 at a convenient height for a seated gemstone polisher. Mounted centrally in a circular recess 14 in the table top 10 is a skive 16 of circular shape. The skive is rotatable about a vertical axis 18 at high speed by a drive motor (not shown) situated beneath the table top, and may be of conventional design with abrasive powder, typically diamond particles, applied to its upper surface 20.

The diameter of the skive 16 is somewhat less than that of the recess 14 with the result that a recessed duct 22 of annular shape is created about the periphery of the skive. A radial web 24 is provided between the outer wall of the duct 22 and the periphery of the skive. The web 25 is situated adjacent an opening 26 in the outer wall of the duct which leads into a passage 28 formed within the thickness of the table top 10. The passage 28 leads into a dust extraction conduit 30 fixed to the edge of the table top, the conduit 30 having an outlet 32 to which a porous collection bag can be attached.

The table top is also formed with three rectangular depressions 34 in which the bases of the supporting posts of gemstone holding equipment can be located and fixed. The holding equipment forms no part of the present invention and may be taken to be of conventional type. With the three illustrated mounting positions it will be possible to polish three gemstones simultaneously on the same skive.

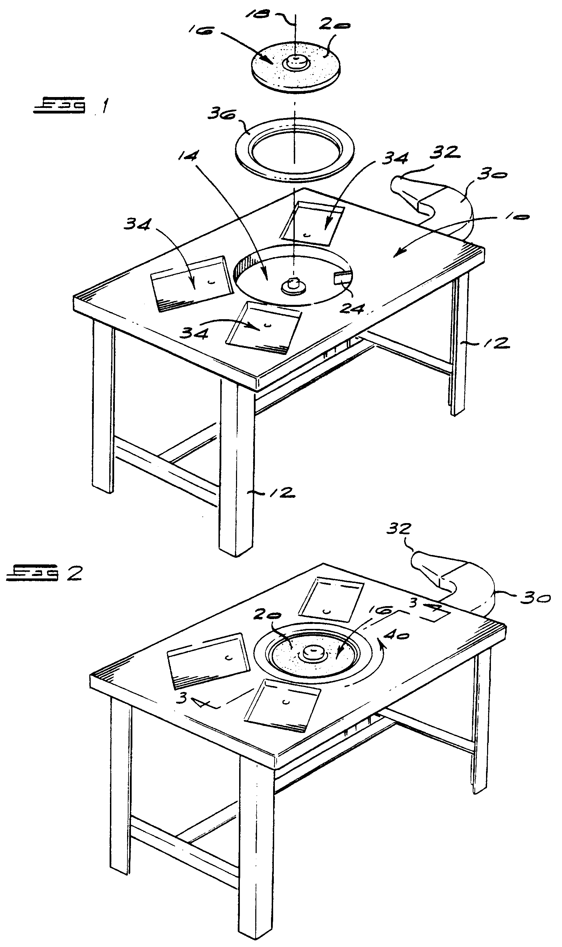

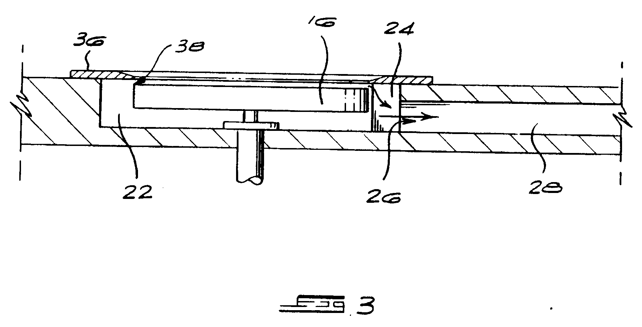

An annular lid 36 is provided which in use is fixed to the table top in a position extending over the duct 22 and the outer periphery of the skive as seen in Figure 3. The upper, abrasive surface of the skive is located just beneath the upper surface of the table top 10 with the result that when the lid 36 is in position a small gap 38 exists between the upper surface of the skive and the under surface of the lid.

In use, with the skive rotating rapidly about the axis 18 at a controlled speed, and gemstones held against the upper surface of the skive for polishing thereof, fine dust or powder is created as a result of the abrasion of the stone. The rapid rotation of the sklve in the direction of the arrow 40 results in the creation of a rapidly moving air stream in the duct 22. The resultant low pressure in the duct has the effect of sucking the dust through the gap 38 into the duct. The entrained dust moves about the duct until it encounters the radial web 24 which diverts the air flow into the passage 28, conduit 30 and eventually into the collection bag. the air is able to flow through the wall of the bag, but entrained dust is captured in the bag for later disposal or re-use, in the case of diamond, for re-surfacing the skive.

To improve the suction of dust from the area of the skive into the duct, the invention contemplates the provision of a suction unit which would be connected to the outlet 32 in place of a porous bag.

It is anticipated that the provision of the duct will contribute to rapid removal of unsightly and dangerous dust from the area of the table top. In addition, the use of a plastics table top 10 will, it is believed, make the table top warmer and more pleasant to the touch. The annular lid 36 may be made of VESCONITE or TEFLON that will withstand damage by contact with a hot stone during polishing.

Another advantage of the illustrated embodiment is the cooling effect on the skive and on stones undergoing polishing due to the air movement into and around the duct.

## Claims

1. A gemstone polishing table comprising a table top (10), a skive (16) which is rotatable about an upright axis (18) and which is recessed in the table top (10) with at least a major part of an upper, abrasive surface of the skive (16) exposed and an annular duct (22) recessed in the table top (10) and surrounding the skive (16) for receiving dust created during a gemstone polishing operation, characterised in that the table further comprises an outlet (26) leading from the duct (22) for exhausting dust from the duct (22) and an annular lid (36) extending over the duct (22) and defining a gap (38) between the upper surface of the skive and the under-surface of the lid for passage of dust into the duct (22).

2. A gemstone polishing table according to claim 1, wherein the upper surface of the skive (16) lies in a plane parallel to and just beneath the upper surface of the table top (10).

3. A gemstone polishing table according to claim 2, wherein the annular lid (36) is fixed to the table top (10) and extends over the periphery of the skive (16).

4. A gemstone polishing table according to any one of the preceding claims, wherein a deflecting web (24) is situated in the duct (22) for deflecting dust into the outlet (26).

5. A gemstone polishing table according to any one of the preceding claims, further comprising an outlet conduit (28, 30) communicating with the outlet (26) from the duct (22).

6. A gemstone polishing table according to claim 5, wherein one part of the outlet conduit (28) is within the table top (10) and another part (30) is external to the table top (10).

7. A gemstone polishing table according to claim 5 or claim 6, further comprising a suction source connectable to the outlet conduit (28, 30).

8. A gemstone polishing table according to any one of the preceding claims, wherein the table top (10) and the annular lid (34) are made of plastics material.

## Patentansprüche

1. Edelsteinpoliertisch mit
einer Tischplatte (10), einer Schleifscheibe (16), die umeine aufrechte Achse (18) drehbar ist und in die Tischplatte (10) eingelassen ist, wobei mindestens ein Großteil einer oberen Schleiffläche der Schleifscheibe (16) freiliegt, und einer ringförmigen Rohrleitung (22), die in die Tischplatte (10) eingelassen ist und die Schleifscheibe (16) umgibt, zur Aufnahme von Staub, der während eines Edelsteinpoliervorgangs erzeugt wird,
dadurch **gekennzeichnet**,
daß der Tisch des weiteren einen Auslaß (26) aufweist, der von der Rohrleitung (22) wegführt zur Ableitung von Staub aus der Rohrleitung (22) und einen ringförmigen Deckel (36), der sich über die Rohrleitung (22) erstreckt, und wobei eine Spalte (38) zwischen der oberen Oberfläche der Schleifscheibe und der unteren Oberfläche des Deckels zum Durchgang von Staub in die Rohrleitung (22) ausgebildet ist.

2. Edelsteinpoliertisch nach Anspruch 1,
dadurch **gekennzeichnet**,
daß die obere Oberfläche der Schleifscheibe (16) in einer Ebene parallel zu und knapp unterhalb der oberen Oberfläche der Tischplatte (10) liegt.

3. Edelsteinpoliertisch nach Anspruch 2,
dadurch **gekennzeichnet**,
daß der ringförmige Deckel (36) an der Tischplatte (10) befestigt ist und sich über die Peripherie der Schleifscheibe (16) hinaus erstreckt.

4. Edelsteinpoliertisch nach einem der vorhergehenden Ansprüche,
dadurch **gekennzeichnet**,
daß eine Ablenkrippe (24) in der Rohrleitung (22) angeordnet ist zum Ablenken von Staub in den Auslaß (26).

5. Edelsteinpoliertisch nach einem der vorhergehenden Ansprüche,
welcher des weiteren einen Auslaßkanal (28, 30) aufweist, der mit dem Auslaß (26) der Rohrleitung (22) in Verbindung steht.

6. Edelsteinpoliertisch nach Anspruch 5,
dadurch **gekennzeichnet**,
daß ein Teil des Auslaßkanals (28) innerhalb der Tischplatte (10) und ein anderer Teil (30) außerhalb der Tischplatte (10) angeordnet ist.

7. Edelsteinpoliertisch nach Anspruch 5 oder 6,
welcher des weiteren eine Absaugeinrichtung aufweist, die mit dem Auslaßkanal (28, 30) verbunden weden kann.

8. Edelsteinpoliertisch nach einem der vorhergehenden Ansprüche,
dadurch **gekennzeichnet**,
daß die Tischplatte (10) und der ringförmige Deckel (34) aus Kunststoff sind.

## Revendications

1. Table de polissage de gemmes, comprenant un dessus de table (10), un polissoir (16) pouvant tourner autour d'un axe vertical (18) et noyé dans le dessus de table (10) avec au moins la plus grande partie de la surface supérieure abrasive du polissoir (16) exposée, et un passage annulaire (22) noyé dans le dessus de table (10) et entourant le polissoir (16) pour recevoir la poussière dégagée durant une opération de polissage de gemmes, caractérisée en ce qu'elle comporte en outre une sortie (26) partant du passage (22) pour évacuer la poussière en provenance du passage (22) et un couvercle annulaire (36) s'étendant sur le passage (22) et délimitant un intervalle (38) entre la surface supérieure du polissoir et la surface inférieure du couvercle pour laisser passer la poussière dans le passage (22).

2. Table de polissage de gemmes selon la revendication 1, dans laquelle la surface supérieure du polissoir (16) est située dans un plan parallèle à la surface supérieure du dessus de table (10) et juste en dessous.

3. Table de polissage de gemmes selon la revendication 2, dans laquelle le couvercle annulaire (36) est fixé sur le dessus de table (10) et s'étend sur la périphérie du polissoir (16).

4. Table de polissage de gemmes selon l'une quelconque des revendications précédentes, dans laquelle une languette de déviation (24) est située dans le passage (22) pour dévier la poussière dans la sortie (26).

5. Table de polissage de gemmes selon l'une quelconque des revendications précédentes, comprenant en outre un conduit de sortie (28,30) communiquant avec la sortie (26) du passage (22).

6. Table de polissage de gemmes selon la revendication 5, dans laquelle une partie du conduit de sortie (28) se trouve à l'intérieur du dessus de table (10) et l'autre partie (30) est extérieure au dessus de table (10).

7. Table de polissage de gemmes selon la revendication 5 ou la revendication 6, comprenant en outre une source d'aspiration pouvant être raccordée au conduit de sortie (28,30).

8. Table de polissage de gemmes selon l'une quelconque des revendications précédentes, dans laquelle le dessus de table (10) et le couvercle annulaire (36) sont en matière plastique.
